# EUROPEAN PATENT APPLICATION

(11) **EP 4 530 682 A1**
(43) Date of publication of application: **02.04.2025**
(21) Application number: 24203022.9
(22) Date of filing: 26.09.2024
(51) Int. Cl.: G01V 1/48, G01V 1/50, G06N 3/08, G06N 20/20

(54) **IN-SITU REAL-TIME BOREHOLE SONIC PROCESSING**

(30) Priority: 29.09.2023 US 202363586763 P; 11.04.2024 US 202463632845 P
(71) Applicant: Services Pétroliers Schlumberger, 75007 Paris (FR); Schlumberger Technology B.V., 2514 JG The Hague (NL)
(72) Inventor: LIANG, Lin, Cambridge, MA 02139 (US); LEI, Ting, Cambridge, MA 02139 (US); WANG, Yixin, New York, NY 10009 (US)
(74) Representative: Schlumberger Intellectual Property Department

(57) **Abstract**

Aspects described herein provide for methods and apparatus for interpretation of borehole sonic dispersion data using data-driven machine learning based approaches. Training datasets are generated from two possible sources. First, application of machine learning enabled automatic dipole interpretation (MLADI) and/or machine learning enabled automatic quadrupole interpretation (MLAQI) methods on field data processing will naturally create substantial volume of labeled data, i.e., pairing dispersion data with dispersion modes labeled by MLADI and MLAQI. Second, it is also possible to generate large volume of synthetic dispersion data from known model parameters. These two types of labeled data can be used either separately or in combination to train neural network models. These models can map dispersion data to modal dispersion much more efficiently.

## Description

### CROSS-REFERENCE TO RELATED APPLICATION

This application claims priority to and the benefit of U.S. Provisional Patent Application Serial No. 63/586,763, entitled "In-Situ Real-Time Borehole Sonic Processing," filed September 29, 2023, and U.S. Provisional Patent Application Serial No. 63/632,845, entitled "In-Situ Real-Time Borehole Sonic Processing," filed April 11, 2024, which are hereby incorporated by reference in their entireties for all purposes.

### FIELD OF THE INVENTION

Aspects of the disclosure relate to sonic wellbore data processing. More specifically, aspects of the disclosure provide for the interpretation of borehole sonic dispersion data using data-driven machine learning based techniques.

### BACKGROUND INFORMATION

This section is intended to introduce the reader to various aspects of art that may be related to various aspects of the present techniques, which are described and/or claimed below. This discussion is believed to be helpful in providing the reader with background information to facilitate a better understanding of the various aspects of the present disclosure. Accordingly, it should be understood that these statements are to be read in this light, and not as an admission of any kind.

Borehole sonic measurements play an indispensable role in the industry for formation evaluation and subsurface characterization. Various interpretation methods have been developed to derive essential formation properties, such as compressional and shear slowness, anisotropy, radial alteration, among others, from measured sonic waveforms. The quality of interpretation using these methods hinges on expert experience, involving parameter tuning based on prior information and domain knowledge. The duration for transitioning from data acquisition to interpretation delivery can span from days to weeks, varying based on the availability and experience of the data analyst(s). Recent machine learning enabled automatic dipole interpretation (MLADI) and machine learning enabled automatic quadrupole interpretation (MLAQI) solutions enable fully automated sonic data processing but involve relatively high computational costs and are relatively slow.

### SUMMARY

A summary of certain embodiments described herein is set forth below. It should be understood that these aspects are presented merely to provide the reader with a brief summary of these certain embodiments and that these aspects are not intended to limit the scope of this disclosure.

The embodiments described herein provide techniques for processing sonic dispersion data in-situ in substantially real-time. For example, systems and methods described herein are configured to train a neural network model using training sonic dispersion data to map the training sonic dispersion data to one or more dispersion modal curves of a plurality of dispersion modal curves, to receive real-time sonic dispersion data from an acoustic logging tool in substantially real-time while the acoustic logging tool is deployed within a wellbore extending through a geological formation, and to utilize the trained neural network model to analyze the real-time sonic dispersion data in substantially real-time while the acoustic logging tool is deployed within the wellbore extending through the geological formation to predict a dispersion modal curve of the plurality of dispersion modal curves to which the real-time sonic dispersion data relates and/or directly calculate a parameter of the geological formation.

Various refinements of the features noted above may be undertaken in relation to various aspects of the present disclosure. Further features may also be incorporated in these various aspects as well. These refinements and additional features may exist individually or in any combination. For instance, various features discussed be low in relation to one or more of the illustrated embodiments may be incorporated into any of the above-described aspects of the present disclosure alone or in any combination. The brief summary presented above is intended to familiarize the reader with certain aspects and contexts of embodiments of the present disclosure without limitation to the claimed subject matter.

### BRIEF DESCRIPTION OF THE DRAWINGS

Various aspects of this disclosure may be better understood upon reading the following detailed description and upon reference to the drawings, in which:
FIG. 1 is an illustration of example logging-while-drilling (LWD) quadrupole dispersion plot, in accordance with embodiments of the present disclosure;
FIG. 2 depicts a schematic diagram of a system for processing sonic and ultrasonic wellbore measurements, in accordance with embodiments of the present disclosure;
FIG. 3 depicts an example operation of an acoustic downhole tool, in accordance with embodiments of the present disclosure;
FIG. 4 is an illustration of LWD quadrupole dispersion data and interpreted quadrupole dispersion mode curve, in accordance with embodiments of the present disclosure;
FIG. 5 is an illustration of converting original dispersion data to a two-dimensional image, in accordance with embodiments of the present disclosure;
FIG. 6 is an example of a neural network model training workflow, in accordance with embodiments of the present disclosure;
FIG. 7 is an example of the general workflow of applying the trained neural network model for sonic data processing, in accordance with embodiments of the present disclosure;
FIG. 8 is an illustration of a comparison of neural network results and true dispersion modal curve, in accordance with embodiments of the present disclosure; and
FIG. 9 illustrates an example method of utilizing the in-situ real-time sonic dispersion data processing techniques described herein, in accordance with embodiments of the present disclosure.

### DETAILED DESCRIPTION

One or more specific embodiments of the present disclosure will be described below. These described embodiments are only examples of the presently disclosed techniques. Additionally, in an effort to provide a concise description of these embodiments, all features of an actual implementation may not be described in the specification. It should be appreciated that in the development of any such actual implementation, as in any engineering or design project, numerous implementation - specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," and "the" are intended to mean that there are one or more of the elements. The terms "comprising," "including," and "having" are intended to be inclusive and mean that there may be additional elements other than the listed elements. Additionally, it should be understood that references to "one embodiment" or "an embodiment" of the present disclosure are not intended to be interpreted as excluding the existence of additional embodiments that also incorporate the recited features.

As used herein, the terms "connect," "connection," "connected," "in connection with," and "connecting" are used to mean "in direct connection with" or "in connection with via one or more elements"; and the term "set" is used to mean "one element" or "more than one element." Further, the terms "couple," "coupling," "coupled," "coupled together," and "coupled with" are used to mean "directly coupled together" or "coupled together via one or more elements." As used herein, the terms "up" and "down," "uphole" and "downhole", "upper" and "lower," "top" and "bottom," and other like terms indicating relative positions to a given point or element are utilized to more clearly describe some elements. Commonly, these terms relate to a reference point as the surface from which drilling operations are initiated as being the top (e.g., uphole or upper) point and the total depth along the drilling axis being the lowest (e.g., downhole or lower) point, whether the well (e.g., wellbore, borehole) is vertical, horizontal or slanted relative to the surface. In addition, the term "interval" with respect to coiled tubing (CT) pipe is used to mean a particular axial portion along an axial length of the CT pipe. In addition, the term "a priori data" is used to mean data that is determined based on theoretical deduction rather than empirical measurement.

In addition, as used herein, the terms "real time", "real-time", or "substantially real-time" may be used interchangeably and are intended to described operations (e.g., computing operations) that are performed without any human-perceivable interruption between operations. For example, as used herein, data relating to the systems described herein may be collected, transmitted, and/or used in control computations in "substantially real time" such that data readings, data transfers, and/or data processing steps occur once every second, once every 0.1 second, once every 0.01 second, or even more frequent, during operations of the systems (e.g., while the systems are operating). In addition, as used herein, the terms "automatic", "automatically", and "automated" are intended to describe operations that are performed or caused to be performed, for example, by a data processing system (i.e., solely by the data processing system, without human intervention). In addition, as used herein, the term "approximately equal to" may be used to mean values that are relatively close to each other (e.g., within 5%, within 2%, within 1%, within 0.5 %, or even closer, of each other).

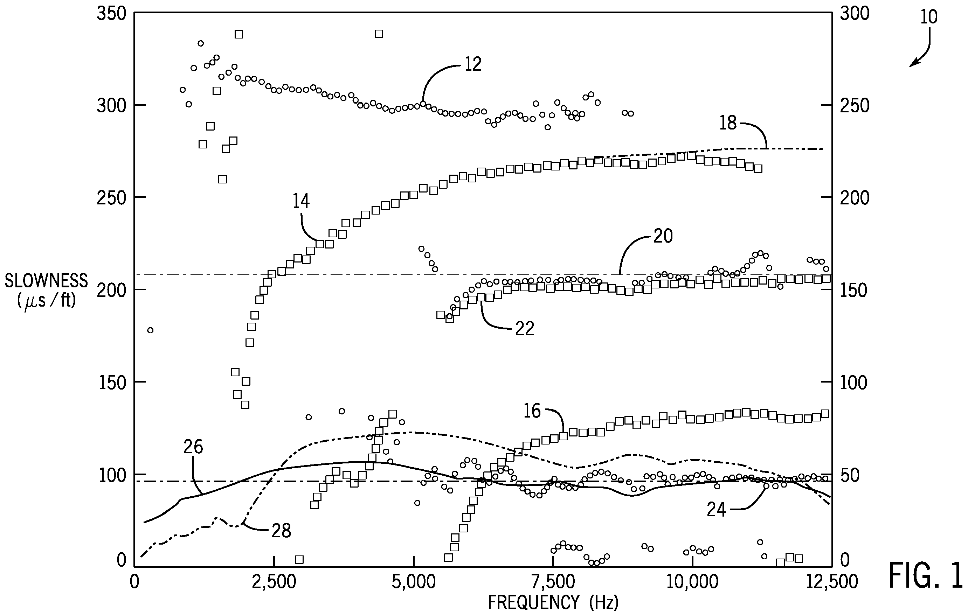

One main issue in dispersion analysis is to properly label the desired mode to carry out model-based inversion. For example, FIG. 1 illustrates a graph 10 of logging-while-drilling (LWD) quadrupole dispersion data, where several modes can be excited simultaneously. In particular, FIG. 1 illustrates the following sets of sonic dispersion data:
- Stoneley mode (data points 12)
- Borehole quadrupole mode (data points 14)
- Collar quadrupole mode (data points 16)
- Modeled dispersion curve (solid line 18) of borehole quadrupole mode for the shear slowness output from the inversion
- Shear head wave or pseudo-Rayleigh mode (dashed line 20)
- Dispersive second-order quadrupole mode (data points 22)
- Compressional head wave (data points 24)
- Frequency spectra for monopole (solid line 26) and quadrupole (solid line 28)

The borehole quadrupole mode 14 is the desired mode to be inverted for formation shear slowness. Traditionally, proper frequency filters need to be set manually in order to label the correct mode and avoid mislabeling other contamination modes, such as the collar quadrupole mode 16 or the higher-order quadrupole mode 22.

As discussed above, machine learning enabled automatic dipole interpretation (MLADI) and machine learning enabled automatic quadrupole interpretation (MLAQI) methods have been developed to interpret such borehole sonic dispersion data for formation elastic properties. Such techniques provide a fully automated solution but are relatively computationally expensive. As such, there is a need for further improving the speed of data processing and reducing the computational costs.

The embodiments described herein include methods for labeling various modes from borehole sonic slowness-frequency data and estimate formation slowness. In particular, the embodiments described herein enable a fully automated solution with high computational efficiency, which makes real-time in-situ processing of borehole sonic measurement possible. The data-driven machine learning (ML) techniques described herein may be deployed to wellsite or downhole for real-time data processing.

The embodiments described herein include a framework for interpretation of borehole sonic dispersion data using data-driven ML-based approaches. In particular, training datasets from two possible sources may be generated. First, application of MLADI and MLAQI methods on field data processing will naturally create substantial volumes of labeled data (e.g., pairing dispersion data with dispersion modes labeled by MLADI and MLAQI). Second, it is also possible to generate large volumes of synthetic dispersion data from known model parameters. These two types of labeled data may be used either separately or in combination to train neural network models. These models may map dispersion data to modal dispersion much more efficiently than MLADI and MLAQI solutions. As such, the embodiments described herein may complete data processing within seconds using just a single CPU, making it suitable for deployment on a computer at a wellsite or even downhole. In certain embodiments, the trained model and processing algorithms described herein may be further implemented on FPGA or ASIC for even better performance.

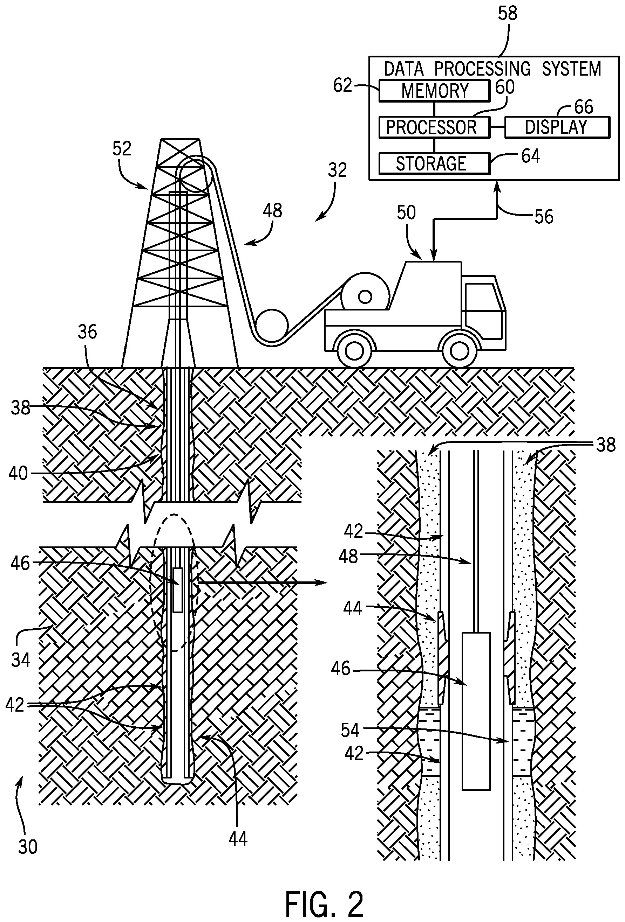

By way of introduction, FIG. 2 depicts a schematic diagram of a system 30 for processing sonic and ultrasonic wellbore measurements. In particular, FIG. 2 illustrates surface equipment 32 above a geological formation 34. In the example of FIG. 2, a drilling operation has previously been carried out to drill a wellbore 36. In the illustrated embodiment, cement 38 has been used to seal an annulus 40 (i.e., the space between the wellbore 36 and casing joints 42 and collars 44).

As seen in FIG. 2, several casing joints 42 (also referred to below as casing 42) are coupled together by the casing collars 44 to stabilize the wellbore 36. The casing joints 42 represent lengths of conductive pipe, which may be formed from steel or similar materials. In certain embodiments, the casing joints 42 each may include an externally threaded (male thread form) connection at each end. A corresponding internally threaded (female thread form) connection in the casing collars 44 may connect two nearby casing joints 42. Coupled in this way, the casing joints 42 may be assembled to form a casing string 54 to a suitable length and specification for the wellbore 36. The casing joints 42 and/or collars 44 may be made of carbon steel, stainless steel, or other suitable materials to withstand a variety of forces, such as collapse, burst, and tensile failure, as well as chemically aggressive fluid.

The surface equipment 32 may carry out various well logging operations to detect conditions of the wellbore 36, as described in greater detail herein. The well logging operations may measure parameters of the geological formation 34 (e.g., resistivity or porosity) and/or the wellbore 36 (e.g., temperature, pressure, fluid type, or fluid flowrate). As will be discussed in greater detail below, some of these measurements may be obtained at various points in the design, drilling, and completion of the well, and may be used to evaluate properties of the geological formation 34 and/or the wellbore 36.

As also described in greater detail herein, an acoustic logging tool 46 may obtain at least some of these measurements. The example of FIG. 2 shows the acoustic logging tool 46 being conveyed through the wellbore 36 by a cable 48. Such a cable 48 may be a mechanical cable, an electrical cable, or an electro-optical cable that includes a fiber line protected against the harsh environment of the wellbore 36. In other embodiments, however, the acoustic logging tool 46 may be conveyed using any other suitable conveyance, such as coiled tubing. The acoustic logging tool 46 may obtain measurements of amplitude and variable density from sonic acoustic waves, acoustic impedance from ultrasonic waves, and/or flexural attenuation and velocity from the third interface echo. The availability of these independent measurements may be used to increase accuracy and confidence in the well and/or formation evaluation and interpretation made possible by the acoustic logging tool 46.

The acoustic logging tool 46 may be deployed inside the wellbore 36 by the surface equipment 32, which may include a vehicle 50 and a deploying system such as a drilling rig 52. Data related to the geological formation 34 or the wellbore 36 gathered by the acoustic logging tool 46 may be transmitted to the surface, and/or stored in the acoustic logging tool 46 for later processing and analysis. In certain embodiments, the vehicle 50 may be fitted with or may communicate with a computer and software to perform data collection and analysis.

FIG. 2 also schematically illustrates a magnified view of a portion of the wellbore 36. As mentioned above, the acoustic logging tool 46 may obtain acoustic measurements relating to the presence of solids or liquids behind the casing 42. When the acoustic logging tool 46 provides such measurements to the surface equipment 32 (e.g., through the cable 48), the surface equipment 32 may pass the measurements as data 56 to a data processing system 58 that includes a processor 60, memory 62, storage 64, and/or a display 66. In other examples, the data 56 may be processed by a similar data processing system 58 at any other suitable location (e.g., remote data center). The data processing system 58 may collect the data 56 and determine one or more indices and indicators that, as described in greater detail herein, may objectively indicate various properties of the geological formation 34, as well as within the wellbore 36 itself. Additionally or alternatively, the data processing system 58 may correlate a variety of data obtained throughout the creation of the well (e.g., design, drilling, logging, well completion, etc.) that may assist in the evaluation of the wellbore 36 and/or the geological formation 34. Namely, the processor 60, using instructions stored in the memory 62 and/or storage 64, may calculate the indicators and/or indices and/or may collect and correlate the other data into the well and/or formation evaluation. As such, the memory 62 and/or the storage 64 of the data processing system 58 may be any suitable article of manufacture that can store the instructions. The memory 62 and/or the storage 64 may be ROM, random-access memory (RAM), flash memory, an optical storage medium, or a hard disk drive, to name a few examples. The display 66 may be any suitable electronic display that can display the logs, indices, and/or indicators relating to the wellbore 36 and/or the geological formation 34.

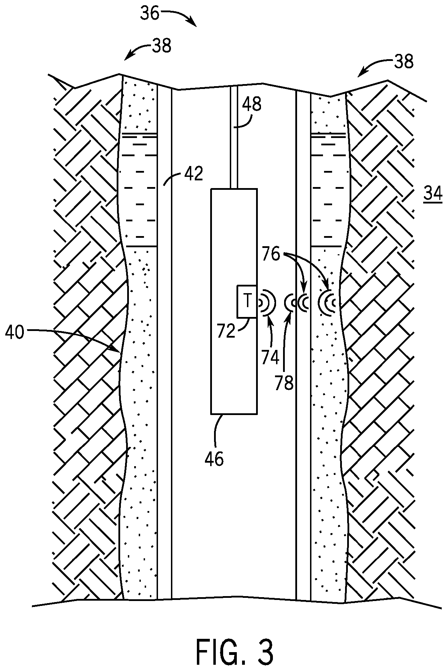

With this in mind, FIG. 3 depicts an example operation of the acoustic logging tool 46 in the wellbore 36. Specifically, in certain embodiments, a transducer 72 in the acoustic logging tool 46 may emit acoustic waves 74 out toward the casing 42 and the geological formation 34. Reflected acoustic waves 76, 78 may correspond to interfaces at the casing 42, the cement 38, and the geological formation 34, respectively. The acoustic logging tool 46 may use any suitable number of different techniques, including measurements of amplitude and variable density from sonic acoustic waves, acoustic impedance from ultrasonic waves, and/or flexural attenuation and velocity from the third interface echo. There are mathematical models with each method that are used to calculate properties of the contents in the annulus 40. As mathematical models, many assumptions and simplifications of the real world may be employed. These may involve corrections and calibration or reference point checks.

As mentioned above, a sonic source (e.g., a monopole sonic source) may be used to excite a cased-hole (e.g., double casing hole) environment and an array of sonic sensing elements may be used to detect reflected acoustic waves corresponding to various interfaces (e.g., interfaces at the casing 42, the cement 38, and the geological formation 34, respectively).

As described in greater detail herein, to facilitate data processing automation, an ML-assisted method known as MLADI was developed for wireline (WL) borehole sonic dipole interpretation. This approach was subsequently expanded to encompass LWD borehole sonic quadrupole interpretation, referred to as MLAQI. Using MLADI and MLAQI, neural network models are trained on synthetic data (generated through modeling such as mode search) to map from model parameters to dispersion data (i.e., slowness-frequency domain). During sonic data processing, waveforms may first be transformed to dispersion data. A combination of clustering algorithms and inversion processes (where the neural network models are used as the forward solver) are used to automatically label and invert the corresponding dispersion mode (e.g., dipole mode and quadrupole mode). These innovative methods enable completely automated data processing without requiring user intervention, while maintaining a quality level comparable to traditional expert interpretation. As a result, they are able to significantly reduce the time from data acquisition to interpretation delivery.

One important consideration of such methods is their dependence on relatively high-performance computing platforms to achieve timely results. For example, the data processing time can range from minutes to hours, contingent on the data volume being processed, due at least in part to the computationally intensive nature of the processing. The embodiments described herein provide data-driven ML-based methods to directly map from the sonic dispersion data to various dispersion modes (e.g., such as dipole and quadrupole, and the other dispersion modes illustrated in FIG.1) and simultaneously obtain the most sensitive formation parameters such as slowness.

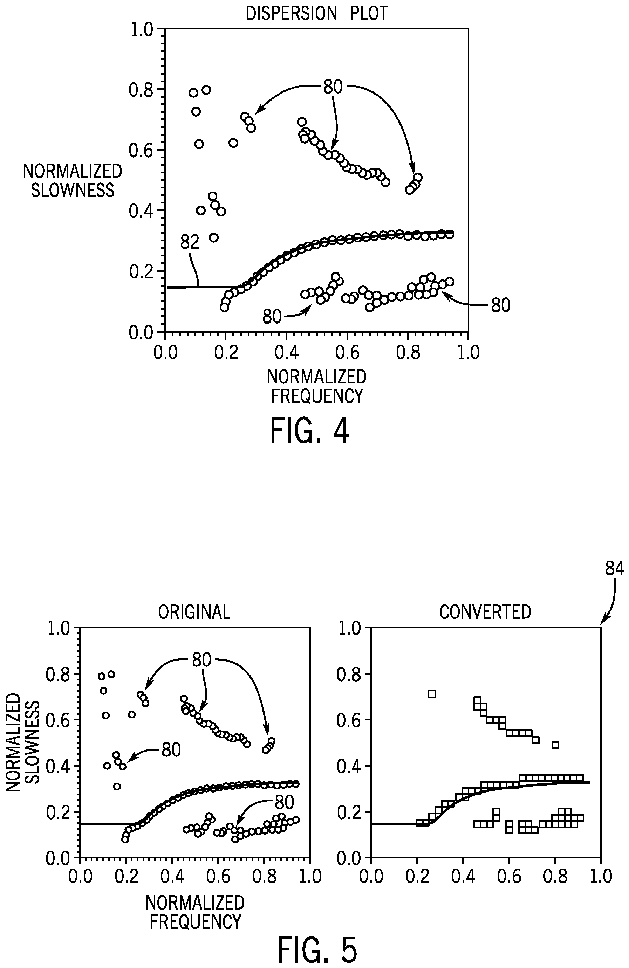

The embodiments described herein include training a neural network model that directly maps from sonic dispersion data 80 to a dispersion modal curve 82, as illustrated in FIG. 4. The first source of the training dataset can be from field data processing (e.g., from field data collected by an acoustic logging tool 46). In practice, many borehole sonic measurements may be processed using MLAQI/MLADI or other methods, from which a large volume of labeled data may be obtained for machine learning. The second source of the training dataset can be from numerical modeling. A variety of model scenarios can be created and simulated by numerical solvers to generate synthetic sonic data with natural labeling. In general, sonic dispersion data 80 may be used as an input, and the dispersion modal curve 82 and/or slowness values may be used as outputs.

In certain embodiments, the training dataset may be pre-processed before being used for machine learning. For example, for a dataset generated from field data processing, a quality control (QC) threshold may be chosen to filter out those data with a low QC score. FIG .5 shows one data sample with a relatively high QC score. In addition, during the conversion, some additional thresholds may be applied to remove some scattered points to suppress noise. For example, as illustrated in FIG. 5, certain dispersion data points 80 that scatter around with low coherence may be removed from consideration to obtain a converted image 84. In addition, during the pre-processing, the slowness and frequency may be normalized using pre-defined lower and upper bounds, as illustrated in FIG. 5. In addition, in certain embodiments, the normalized dispersion data 80 may be converted to a two-dimensional (2D) image 84 or, indeed, may be transformed into any type of image 84 (e.g., a binary image, an image with more color scales, and so forth). In certain embodiments, other attributes such as amplitude in the dispersion plot may be ignored and the dispersion data 80 may be converted into a binary image (i.e., black and white, as with the illustrated converted image 84). However, in other embodiments, it is also possible to take into account additional attributes and convert the dispersion data 80 into an image 84 with refined color scales.

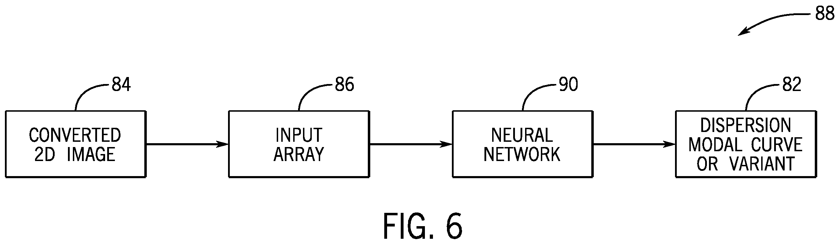

The next step is to train a neural network model by feeding the pre-processed labeled dataset (e.g., the converted image 84 illustrated in FIG. 5) as an input array 86, as illustrated in the neural network model training workflow 88 of FIG. 6. A variety of neural network structures 90 may be selected for this ML problem. Converted 2D images 84 may be transformed to different types of arrays as inputs, depending on the particular neural network structure 90 utilized. In addition, in certain embodiments, the neural network model parameters may be optimized to ensure output matching the labeled dispersion modal curve 82 or variant (e.g., a true formation shear slowness could be concatenated to the one-dimensional (1D) array of dispersion modal curve 82). In certain embodiments, a fully connected neural network model 90 may be used, but it can be replaced by other structures such as a convolutional neural network model 90, and so forth. As discussed above, dispersion data 80 can be transformed into an image 84, either a binary image, or an image with more color scales. To use a fully connected neural network structure, the 2D image 84 (i.e., a 2D input array) may be transformed into a 1D array as an input array 86. The output may be a 1D array representing the dispersion modal curve 82 that is composed of slowness for pre-defined frequencies.

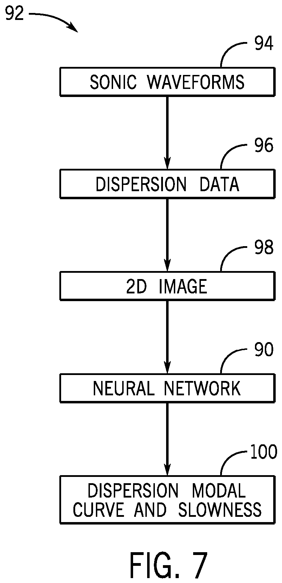

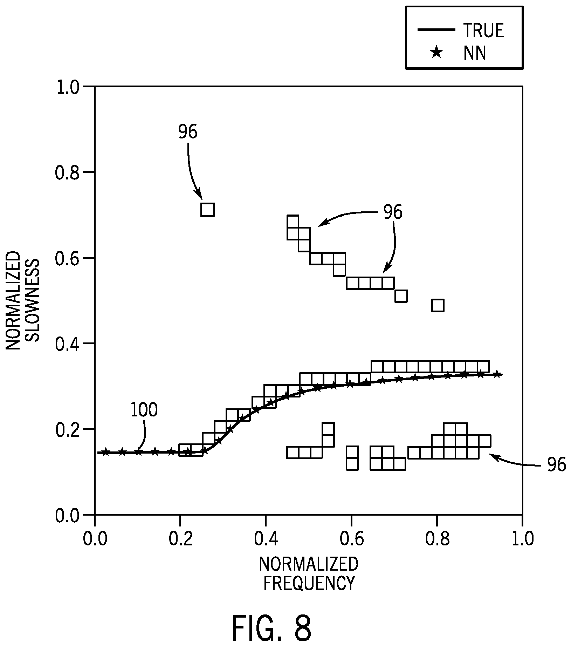

Once trained (e.g., using the neural network model training workflow 88 of FIG. 6), the trained neural network model 90 may be used for real-time field data processing. FIG. 7 illustrates a general high-level workflow 92 of utilizing a trained neural network model 90 and FIG. 8 illustrates results when applied to one sample data set. In particular, sonic waveforms 94 may be collected (e.g., using an acoustic logging tool 46) in substantially real-time and real-time dispersion data 96 (e.g., similar to the training dispersion data 80 discussed above) may be extracted from the sonic waveforms 94 and converted into a 2D image 98 (e.g., similar to the training 2D images 84 discussed above) or other type of image, which may be fed into the trained neural network model 90 to predict a dispersion modal curve 100 and/or directly calculate a slowness. It will be appreciated that the predicted dispersion modal curve 100 may, in turn, be used to determine certain parameters of the geological formation 34 including, but not limited to, slowness.

As discussed above, this workflow 92 may be executed on different infrastructures, including CPU on wellsite or downhole computers, FPGA or ASIC. In other words, instead of utilizing the data processing system 58 to perform all of the data processing functions described herein, in other embodiments, other data processing systems (e.g., FPGA or ASIC integrated into an acoustic logging tool 46) may be utilized to perform the data processing functions described herein. In addition, in other embodiments, the data processing system 58 may perform some of the data processing functions described herein while other data processing systems (e.g., FPGA or ASIC integrated into an acoustic logging tool 46) may perform other data processing functions described herein. As but one non-limiting example, in certain embodiments, the data processing system 58 may perform the training of the neural network model 90 described herein while other data processing systems (e.g., FPGA or ASIC integrated into an acoustic logging tool 46) may analyze real-time data based on the trained neural network model 90, as also described herein.

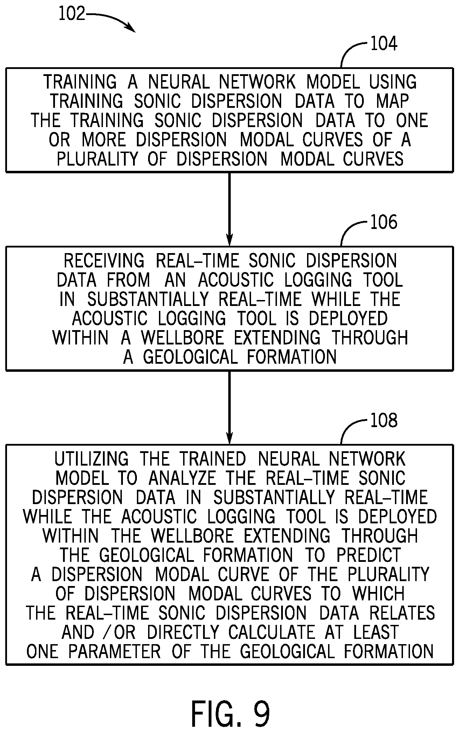

FIG. 9 illustrates an example method 102 of utilizing the in-situ real-time sonic dispersion data processing techniques described herein. As illustrated in FIG. 9, in certain embodiments, the method 102 may include training a neural network model 90 using training sonic dispersion data 80 to map the training sonic dispersion data 80 to one or more dispersion modal curves 82 of a plurality of dispersion modal curves 82 (block 104). In addition, in certain embodiments, the method 102 may also include receiving real-time sonic dispersion data 96 from an acoustic logging tool 46 in substantially real-time while the acoustic logging tool 46 is deployed within a wellbore 36 extending through a geological formation 34 (block 106). In addition, in certain embodiments, the method 102 may further include utilizing the trained neural network model 90 to analyze the real-time sonic dispersion data 96 in substantially real-time while the acoustic logging tool 46 is deployed within the wellbore 36 extending through the geological formation 34 to predict a dispersion modal curve 82 of the plurality of dispersion modal curves 82 (as a predicted dispersion modal curve 100) to which the real-time sonic dispersion data 96 relates and/or directly calculate at least one parameter (e.g., compressional slowness, shear slowness, anisotropy, radial alteration, and so forth) of the geological formation 34 (block 108). As discussed above, it will be appreciated that the predicted dispersion modal curve 100 may, in turn, be used to determine certain parameters of the geological formation 34 including, but not limited to, compressional slowness, shear slowness, anisotropy, radial alteration, and so forth.

In addition, in certain embodiments, training the neural network model 90 using training sonic dispersion data 80 may include converting the training sonic dispersion data 80 into an image 84, and training the neural network model 90 using the image 84 as an input array 86. In certain embodiments, the image 84 may be a 2D image 84 of the training sonic dispersion data 80. In addition, in certain embodiments, the method 102 may also include pre-processing the training sonic dispersion data 80 prior to training the neural network model 90 using training sonic dispersion data 80. For example, in certain embodiments, pre-processing the training sonic dispersion data 80 may include filtering out one or more training sonic dispersion data sets 80 having a quality control (QC) score lower than a QC threshold. In addition, in certain embodiments, pre-processing the training sonic dispersion data 80 may include normalizing parameters of the training sonic dispersion data 80 using pre-defined lower and upper bounds.

In addition, in certain embodiments, the method 102 may include utilizing the trained neural network model 90 to interpret multiple modes associated with the plurality of dispersion modal curves 82 simultaneously. In addition, in certain embodiments, the method 102 may include utilizing the trained neural network model 90 to interpret compressional slowness and shear slowness for the geological formation 34 simultaneously. In addition, in certain embodiments, the at least one parameter of the geological formation 34 may include shear slowness for the geological formation 34, and the method 102 may include using the formation shear slowness as an initial guess for machine learning enabled automatic dipole interpretation (MLADI) analysis or machine learning enabled automatic quadrupole interpretation (MLAQI) analysis for further refinement of the shear slowness for the geological formation 34.

In addition, in certain embodiments, the plurality of dispersion modal curves 82 may include a Stoneley mode 12, a borehole quadrupole mode 14, a collar quadrupole mode 16, a modeled dispersion curve 18 of a borehole quadrupole mode for shear slowness output, a shear head wave or pseudo-Rayleigh mode 20, a dispersive second-order quadrupole mode 22, a compressional head wave 24, and a frequency spectra for monopole 26 or quadrupole 28.

In general, the solution described herein needs minimal computational resource enabling real-time data processing at downhole conditions, which is extremely attractive for an LWD scenario due to limited bandwidth on data transmission during drilling. This means that sonic measurements may be interpreted in substantially real-time while drilling, which can help to optimize the drilling process with reduced risk (e.g., real-time pore pressure and/or stress prediction).

In addition, the framework may be extended to other modes such Stoneley, dipole, pseudo-Rayleigh, leaky-P, and so forth (e.g., as discussed above with respect to FIG. 1) and applied to interpret multiple modes simultaneously. The framework may also be extended to interpret compressional and shear slowness simultaneously. In addition, the solution may be used to obtain the formation shear slowness, which can then be used as an initial guess for MLADI/MLAQI analysis for further refinement. This hybrid solution is much faster than typical MLADI/MLAQI analysis while maintaining good accuracy.

The specific embodiments described above have been illustrated by way of example, and it should be understood that these embodiments may be susceptible to various modifications and alternative forms. It should be further understood that the claims are not intended to be limited to the particular forms disclosed, but rather to cover all modifications, equivalents, and alternatives falling within the spirit and scope of this disclosure.

The techniques presented and claimed herein are referenced and applied to material objects and concrete examples of a practical nature that demonstrably improve the present technical field and, as such, are not abstract, intangible or purely theoretical. Further, if any claims appended to the end of this specification contain one or more elements designated as "means for [perform]ing [a function]..." or "step for [perform]ing [a function]...", it is intended that such elements are to be interpreted under 35 U.S.C. § 112(f). However, for any claims containing elements designated in any other manner, it is intended that such elements are not to be interpreted under 35 U.S.C. § 112(f).

## Claims

1. A method, comprising:
training a neural network model using training sonic dispersion data to map the training sonic dispersion data to one or more dispersion modal curves of a plurality of dispersion modal curves;
receiving real-time sonic dispersion data from an acoustic logging tool in substantially real-time while the acoustic logging tool is deployed within a wellbore extending through a geological formation; and
utilizing the trained neural network model to analyze the real-time sonic dispersion data in substantially real-time while the acoustic logging tool is deployed within the wellbore extending through the geological formation to predict a dispersion modal curve of the plurality of dispersion modal curves to which the real-time sonic dispersion data relates and/or directly calculate at least one parameter of the geological formation.

2. The method of claim 1, wherein training the neural network model using training sonic dispersion data comprises converting the training sonic dispersion data into a two-dimensional image, and training the neural network model using the two-dimensional image as an input array.

3. The method of claim 1 or 2, comprising pre-processing the training sonic dispersion data prior to training the neural network model using training sonic dispersion data.

4. The method of claim 3, wherein pre-processing the training sonic dispersion data comprises filtering out one or more samples of the training sonic dispersion data having a quality control (QC) score lower than a QC threshold.

5. The method of claim 3 or 4, wherein pre-processing the training sonic dispersion data comprises normalizing parameters of the training sonic dispersion data using pre-defined lower and upper bounds.

6. The method of any one of the preceding claims, comprising utilizing the trained neural network model to interpret multiple modes associated with the plurality of dispersion modal curves simultaneously.

7. The method of any one of the preceding claims, comprising utilizing the trained neural network model to interpret compressional slowness and shear slowness for the geological formation simultaneously.

8. The method of any one of the preceding claims, wherein the at least one parameter of the geological formation comprises shear slowness for the geological formation, and wherein the method comprises using the shear slowness for the geological formation as an initial guess for machine learning enabled automatic dipole interpretation (MLADI) analysis or machine learning enabled automatic quadrupole interpretation (MLAQI) analysis for further refinement of the shear slowness for the geological formation.

9. The method of any one of the preceding claims, wherein the plurality of dispersion modal curves comprises a Stoneley mode, a borehole quadrupole mode, a collar quadrupole mode, a dipole mode, a shear head wave or pseudo-Rayleigh mode and/or a compressional head wave.

10. A data processing system configured to perform the method of any of the preceding claims.

11. The data processing system of claim 10, wherein the data processing system is configured to utilize the trained neural network model to interpret other modes associated with the plurality of dispersion modal curves simultaneously, wherein the other modes comprise a Stoneley mode, a dipole mode, a pseudo-Rayleigh mode, a leaky-P mode, or some combination thereof.
